# EUROPÄISCHE PATENTSCHRIFT

(11) **EP 0 500 638 B1**
(45) Veröffentlichungstag und Bekanntmachung des Hinweises auf die Patenterteilung: **31.08.1994**
(21) Anmeldenummer: 90916478.2
(22) Anmeldetag: 07.11.1990
(51) Int. Cl.: B62D 5/097, B62D 5/06

(54) **HYDROSTATISCHE HILFSKRAFTLENKUNG**
HYDROSTATIC ASSISTED STEERING SYSTEM
DIRECTION ASSISTEE HYDROSTATIQUE

(30) Priorität: 10.11.1989 DE 3937483
(43) Veröffentlichungstag der Anmeldung: 02.09.1992
(73) Patentinhaber: ZF FRIEDRICHSHAFEN Aktiengesellschaft, 88038 Friedrichshafen (DE)
(72) Erfinder: FASSBENDER, Rolf, D-7075 Mutlangen (DE)
(86) Internationale Anmeldenummer: EP9001856
(87) Internationale Veröffentlichungsnummer: WO9107303

(56) Entgegenhaltungen:
- AU-A- 472 598
- DE-A- 1 550 557
- DE-A- 2 102 019
- DE-A- 3 628 242
- FR-A- 2 377 922

## Beschreibung

Die Erfindung bezieht sich auf eine hydrostatische Hilfskraftlenkung nach dem Oberbegriff von Anspruch 1.

In hydrostatischen Hilfskraftlenkungen erhält man eine Synchronisation zwischen der Drehbewegung am Lenkhandrad und der Bewegung der gelenkten Räder über eine sogenannte Dosier- oder Handpumpe. Die Handpumpe läßt einen den Drehwinkel proportionalen Ölstrom über eine Ventileinrichtung einem die Lenkachse betätigenden Servomotor zufließen. Leckagen aus dem die Handpumpe verlassenden Ölstrom, die hauptsächlich innerhalb des Lenkventils auftreten, sind hierbei für Synchronisationsfehler verantwortlich. Dies wirkt sich so aus, daß sich die Lenkhandraddrehung nicht in eine gleichzeitige Hubbewegung des Servomotors umsetzen läßt. Das fehlende Lecköl läßt sich daher nur durch zusätzliches Drehen des Lenkhandrades auffüllen. Die Leckage im Lenkventil entsteht zwischen den an den Servomotor angeschlossenen Hochdrucknuten und den an den Behälter angeschlossenen Niederdrucknuten, die nur metallisch in einem schmalen Durchmesserbereich eines in einem Gehäuse gleitenden Lenkventilkolbens gegeneinander abgedichtet sind. An den Kanten zwischen den Hochdruck- und den Niederdrucknuten besteht nämlich ein hohes Druckgefälle.

Aus der gattungsgemäßen DE-A 21 02 019 (TRW Inc. Cleveland, Ohio) ist es bereits bekannt, zur Verringerung der Leckage sogenannte Drucksperrnuten zwischen den Stellmotor-Hochdrucknuten und den Behälter-Niederdrucknuten vorzusehen. Jeweils eine der Drucksperrnuten läßt sich über einen federbelasteten Ventilkolben an eine mit einer Pumpe verbundene Hochdrucknut immer dann anschließen, wenn die angrenzende Stellmotor-Hochdrucknut mit dem Arbeitsdruck belastet wird. Auf diese Weise wirken die Drucksperrnuten als Druckdämme, da diese das hohe Druckgefälle zwischen den Hoch- und Niederdrucknuten vermeiden. Da man jedoch den Druckaufbau in den Drucksperrnuten über die zwei federbelasteten Ventilkolben erzeugt, bedarf die Einrichtung eines verhältnismäßig hohen Bauaufwandes und Raumbedarfs.

Es ist daher Aufgabe der Erfindung, die Drucksperrnuten einschließlich ihrer Steuerung mit möglichst geringem Bauaufwand innerhalb eines kleinen Bauraumes unterzubringen.

Nach der Erfindung löst man diese Aufgabe durch die Merkmale nach Anspruch 1. Vorteilhafte Ausgestaltungen enthalten die Ansprüche 2 bis 5.

Nach dem Hauptmerkmal führt von jeder Drucksperrnut ein Kanal an eine Stirnseite einer Bohrung, die einen Kolben enthält. Diese Bohrung steht über einen weiteren Kanal mit einer ständig an die Hochdruckpumpe angeschlossenen Hochdrucknut in Verbindung. Mit dieser im Bauaufwand sehr einfachen Anordnung kann der in der Bohrung verschiebbare Kolben immer die Drucksperrnut mit der Hochdruckpumpe verbinden, die der je nach Lenkeinschlag druckführenden Servomotor-Hochdrucknut benachbart ist. Dadurch, daß die Drücke in der Drucksperrnut und in der Servomotor-Hochdrucknut beim Lenken nahezu gleich sind, läßt sich ein Durchsickern des Öls von der Hochdrucknut zur Niederdrucknut unterdrücken. Der bewegliche Kolben stellt eine Verbindung zwischen der an die Hochdruckpumpe angeschlossenen Hochdrucknut und der jeweils druckführenden Servomotor-Hochdrucknut in seinen beiden durch die Stirnseiten der Bohrung bestimmten Endlagen her. Diese Funktion läßt sich auf kleinem Bauraum mit nur drei Leitungsanschlüssen und einem federlosen Kolben verwirklichen.

Nach einem Merkmal der Erfindung bemißt man einen zwischen den Servomotor-Hochdrucknuten und den Behälter-Niederdrucknuten liegenden Gehäuse-Dichtbund mindestens so breit, daß der den Servomotor steuernde Ventilkolben diesen Steg in der Mittenstellung überdeckt. Durch diese Maßnahme läßt sich vermeiden, daß in der Mittenstellung (Neutralstellung) des Lenkventilkolbens eine sonst mögliche Leckage zwischen den Servomotor-Hochdrucknuten und den Behälter-Niederdrucknuten über die zusätzlichen Drucksperrnuten stattfinden kann.

Nach einem weiteren Merkmal ordnet man die Drucksperrnuten so an, daß diese bei einem Verstellweg des Lenkventilkolbens aus der Mittenstellung um einen Betrag gleich oder größer der Breite des zwischen der Servomotor-Hochdrucknut und Behälter-Niederdrucknut liegenden Gehäuse-Dichtbundes vom Ventilkolben überdeckt werden. Hieraus ergibt sich der Vorteil, daß die leckageverringernde Wirkung bei kleinem axialen Bauraum bereits ab dem Verstellweg des Ventilkolbens wirksam ist, von dem an eine Bewegung des Servomotorkolbens erfolgen kann.

Weiter sieht man nach einem Merkmal vor, daß die Einmündung des mit der Hochdruckpumpe verbundenen Kanals in die den Kolben enthaltende Bohrung etwa gleich breit ist, wie die Länge des Kolbens. Dies hat beim Umsteuern des Kolbens den Vorteil kleinster Kolbenwege. Die Drucksperreinrichtung ist dadurch schnell betriebsbereit.

Vorteilhaft versieht man noch den mit der Hochdrucknut verbundenen und zur Bohrung des Kolbens führenden Kanal mit einer Drosselstelle, so daß der Durchflußwiderstand erheblich größer ist als der Durchflußwiderstand durch die von der Bohrung des Kolbens zu den Drucksperrnuten führenden Kanäle. Hierdurch ist ein Umschalten des Kolbens auch dann gesichert, wenn dieser eine Ausgangsstellung auf der Seite der Bohrung einnimmt, die an die jeweils wirksame Drucksperrnut angeschlossen ist.

Die Erfindung ist nachfolgend anhand des in der Zeichnung dargestellten Ausführungsbeispiels näher erläutert.

Es zeigen:
- Fig. 1: einen vereinfachten Querschnitt durch eine hydrostatische Hilfskraftlenkung und
- Fig. 2: eine Ausschnittsvergrößerung entsprechend Fig. 1.

Eine mit einem nicht dargestellten Lenkhandrad verbundene Lenkspindel 1 steht über ein Federelement 2 und eine Gelenkwelle 3 mit einem außenverzahnten Zahnrad 4 in Verbindung. Das Zahnrad 4 weist einen Zahn weniger als ein feststehender Zahnring 5 auf. Das Zahnrad 4 und der Zahnring 5 bilden zusammen eine Dosiereinrichtung in Form einer Handpumpe 6. Ein Mitnehmerstift 7 koppelt die Lenkspindel 1 mit Verdrehspiel mit der Gelenkwelle 3. Der Mitnehmerstift 7 verbindet außerdem einen in einer Gehäusebohrung 8 verschiebbaren Lenkventilkolben 10 drehfest mit der Gelenkwelle 3. Der Lenkventilkolben 10 steht über ein Steilgewindeprofil 11 mit der Lenkspindel 1 im Eingriff und läßt sich daher bei einer Drehbewegung in beiden Richtungen axial verschieben. Das Federelement 2 dient zur Mitteneinstellung von Gelenkwelle 3 und Lenkspindel 1.

Ein Gehäuse 12 hat einen Druckkanal 13 für eine Hochdruckpumpe 14, einen Rücklaufkanal 15 für einen Behälter 16 sowie zwei Druckkanäle 17 und 18 für einen Servomotor 20. Zwischen dem Druckkanal 13 und dem Rücklaufkanal 15 sitzt ein auf den zulässigen Höchstdruck der Lenkung eingestelltes Überdruckventil 19. Der Druckkanal 13 mündet über eine Hochdrucknut 21 in die Gehäusebohrung 8, während sich der Rücklaufkanal 15 aufteilt und über zwei Niederdrucknuten 22 und 23 in die Bohrung 8 einmündet. Die Druckkanäle 17 und 18 schließen an die gleichfalls zur Bohrung 8 führenden Hochdrucknuten 24 und 25 an. Die vorgenannten Nuten sind in üblicher Weise als Ringnuten ausgeführt. Nachfolgend sind aus Vereinfachungsgründen die zum Behälter führenden Niederdrucknuten 22 und 23 kurz als ND-Nuten und die zum Servomotor 20 führenden Hochdrucknuten 24 und 25 als HD-Nuten bezeichnet. Die an die Pumpe 14 angeschlossene Hochdrucknut 21 erhält die Bezeichnung P-Nut.

Am Lenkventilkolben 10 sieht man durch mehrere Eindrehungen geschaffene Stege 26 bis 30 vor, die im Zusammenspiel mit den vorgenannten Nuten, jeweils entsprechend der Drehrichtung am Lenkhandrad, den erforderlichen Druck im Servomotor 20 anregeln. Außerdem ist an beiden Enden des Lenkventilkolbens 10 je eine Umfangsreihe von Verteilerlängsnuten 31 und 32 vorgesehen, die sich bei einer Druckanregelung (Axialverschiebung von 10) mit einem von zwei stirnseitig angrenzenden Druckräumen 33 bzw. 34 verbinden lassen.

In der gezeichneten Mittenstellung des Lenkventilkolbens 10 fließt der Ölstrom der Pumpe 14 zu der P-Nut 21, und von dort über die zwischen den Stegen 26 und 27 bzw. 26 und 28 liegenden Eindrehungen zu den mit dem Behälter 14 verbundenen ND-Nuten 22 und 23. Die Pumpe 14 fördert also drucklos im Kreis. Hierbei sind die Druckräume des Servozylinders auf die Handpumpe geschaltet, so daß eine Rückmeldung der auf die gelenkten Räder einwirkenden Kräfte am Lenkhandrad spürbar ist.

Verstellt man durch eine Drehbewegung an der Lenkspindel 1 den Lenkventilkolben 10, z. B. nach rechts, dann drosselt der Steg 26 den Ölstrom der Pumpe 14 zwischen der P-Nut 21 und der zwischen den Stegen 26 und 28 liegenden Eindrehung. Gleichzeitig drosselt der Steg 27 den Durchlauf des Öls von der P-Nut 21 zu der zwischen den Stegen 26 und 27 liegenden Eindrehung des Ventilkolbens 10. Dies bedeutet, daß nur noch eine verhältnismäßig kleine Ölmenge über die ND-Nuten 22 und 23 in den Rücklaufkanal 15 abfließen kann. Dadurch steigt der Druck im Druckkanal 13 an. Über einen Zweigkanal 35 steht der Pumpendruck im Druckraum 34 und über axiale Kanäle 36 des Lenkventilkolbens 6 auch im Druckraum 33. Sobald durch die Verschiebung des Lenkventilkolbens 10 nach rechts die Verteilerlängsnut 32 in den Druckraum 34 eintaucht, strömt das unter Druck stehende Öl durch einen Kanal 37 zu einer Zulaufseite 38 der Handpumpe 6. Eine Ablaufseite 40 der Handpumpe 6 steht über einen weiteren Kanal 41, und die Verteilerlängsnut 31 mit der HD-Nut 24 in Verbindung. Von der HD-Nut 24 fließt das Öl über den Druckkanal 17 zum Servomotor 20. Das aus dem rechten Druckraum des Servomotors 20 verdrängte Öl fließt über den Druckkanal 18 zur HD-Nut 25 und von dort über die zwischen den Stegen 30 und 28 liegende Eindrehung des Lenkventilkolbens 10 zur mit dem Rücklaufkanal 15 verbundenen ND-Nut 23.

In dem die Handpumpe 6 über den Kanal 41 verlassenden Ölstrom tritt Lecköl auf. Die Drehbewegung der Lenkspindel 1 läßt sich daher nicht in eine entsprechende Längsbewegung des Servomotors 20 umsetzen. Bei der beschriebenen Verstellbewegung des Lenkventilkolbens 10 nach rechts entstünde diese Leckage ohne besondere Vorkehrungen zwischen der HD-Nut 24 und der ND-Nut 22, da zwischen diesen beiden Nuten das größte Druckgefälle besteht. Zur Verringerung dieser Leckage sieht man zwischen der HD-Nut 24 und der ND-Nut 22 bzw. der HD-Nut 25 und der ND-Nut 23 eine Drucksperrnut 42 bzw. 43 vor. Die verbleibende Breite eines Gehäuse-Dichtbundes 44 bzw. 45 zwischen der HD-Nut 24 und der Drucksperrnut 42 bzw. der HD-Nut 25 und der Drucksperrnut 43, wählt man zweckmäßig so, daß sich die Überdeckung des Lenkventilkolbens 10 zwischen der HD-Nut 24 und einer Eindrehung 46, bzw. der HD-Nut 25 und einer Eindrehung 47, in der gezeichneten Mittenstellung des Kolbens 10 durch die Drucksperrnuten 42 und 43 nicht verringert.

Die Drucksperrnuten 42 und 43 stehen über Kanäle 48 bzw. 50 mit Stirnseiten einer Bohrung 51 in Verbindung. In der Bohrung 51 kann sich ein Kolben 52 axial frei bewegen. Die Bohrung 51 ist etwas länger als die doppelte Länge des Kolbens 52. Ein an die P-Nut angeschlossener Kanal 53 mündet über eine Ringnut 49 in die Bohrung 51. Die Ringnut 49 hat eine Breite, die etwa der Länge des Kolbens 52 entspricht. Dadurch ist die Bohrung 51 unabhängig von der Kolbenstellung stets mit dem Kanal 53 verbunden. Im Kanal 53 befindet sich eine Drosselstelle 54, die man so bemißt, daß der Strömungswiderstand zwischen der P-Nut 21 und der Bohrung 51 immer deutlich größer als der Strömungswiderstand zwischen der Bohrung 51 und der Drucksperrnut 42 bzw. 43 ist.

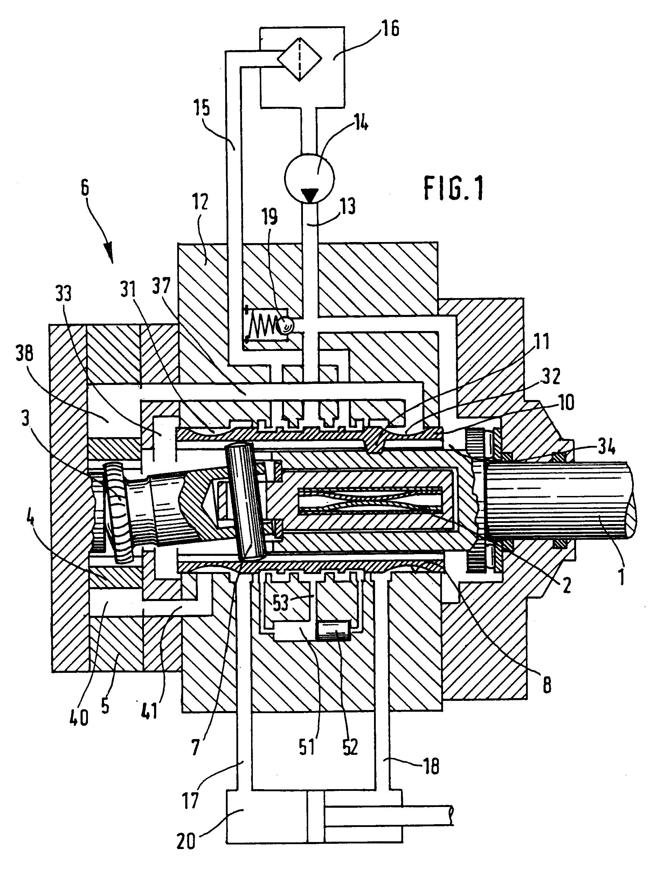

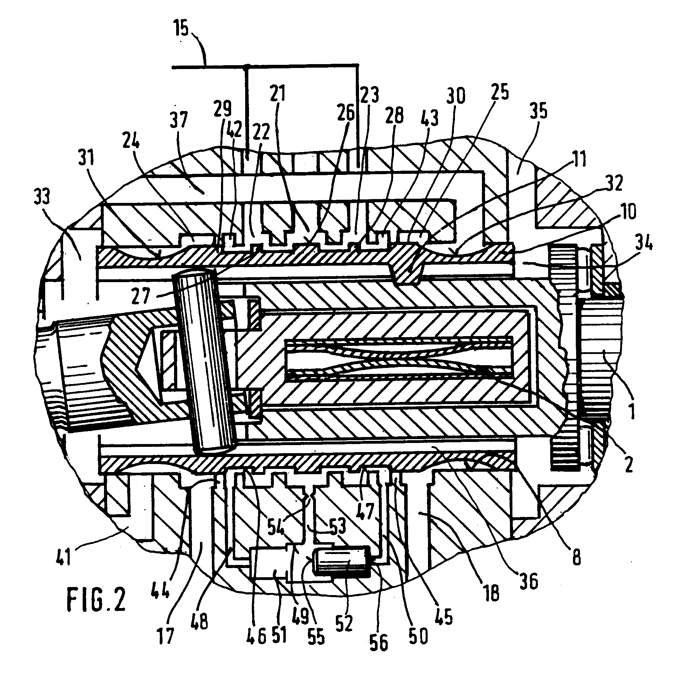

Geht man wiederum von der beschriebenen Verstellbewegung des Lenkventilkolbens 10 nach rechts aus, dann muß - damit eine Kolbenbewegung im Servomotor 20 stattfinden kann - die Eindrehung 47 in die HD-Nut 25 eintauchen. Gleichzeitig steht die Drucksperrnut 43 über die Eindrehung 47 mit der ND-Nut 23 und mit dem an diese Nut angeschlossenen Behälter 16 in Verbindung. Der niedrige Rücklaufdruck wirkt daher über den Kanal 50 auf eine rechte Stirnfläche 56 des Kolbens 52. Gleichzeitig überdeckt der Steg 29 des Lenkventilkolbens 10 die Drucksperrnut 42, so daß diese keine Verbindung zu weiterführenden Kanälen hat. In der HD-Nut 24 steht der zum Bewegen des Servomotors 20 erforderliche höhere Druck bereit. Dieser Druck entspricht etwa dem Druck in der P-Nut 21. Geht man davon aus, daß sich der Kolben 52 entgegen der Darstellung in Fig. 1 und 2 zunächst in der linken Endlage befindet, dann hat die P-Nut 21 über den Kanal 53, die Bohrung 51 und den Kanal 50 mit der Drucksperrnut 43 Verbindung. Der Durchlaufwiderstand zwischen der P-Nut 21 und der Bohrung 51 ist deutlich größer als zwischen der Bohrung 51 und der an den Behälter 16 angeschlossenen Drucksperrnut 43. Der auf eine rechte Stirnfläche 56 des Kolbens 52 wirkende Druck ist nur wenig höher als der Druck im Behälter 16. Sobald, wie erwähnt, der Steg 29 des Lenkventilkolbens 10 die Drucksperrnut 42 überdeckt und diese von der ND-Nut 22 trennt, steigt der Druck in der Sperrnut 42 durch die Leckströmung von der HD-Nut 24 zur ND-Nut 22 an. Dieser erhöhte Druck wirkt über den Kanal 48 auf eine linke Stirnfläche 55 des Kolbens 52 und verschiebt diesen in die gezeichnete Stellung. In dieser Stellung des Kolbens 52 hat die Drucksperrnut 42 über den Kanal 48, die Bohrung 51, den Kanal 53 mit der an die Pumpe 14 angeschlossenen P-Nut 21 Verbindung. Dadurch, daß die Drucksperrnut 42 Hochdruck führt, läßt sich das Druckgefälle und die damit verbundene Leckage zwischen der HD-Nut 24 und der ND-Nut 22 sehr klein halten.

### Bezugszeichen

- 1: Lenkspindel
- 2: Federelement
- 3: Gelenkwelle
- 4: Zahnrad
- 5: feststehender Zahnring
- 6: Handpumpe
- 7: Mitnehmerstift
- 8: Gehäusebohrung
- 9: -
- 10: Lenkventilkolben
- 11: Steilgewindeprofil
- 12: Gehäuse
- 13: Druckkanal für 14
- 14: Hochdruckpumpe (Pumpe)
- 15: Rücklaufkanal
- 16: Behälter
- 17: Druckkanal
- 18: Druckkanal
- 19: Überdruckventil
- 20: Servomotor
- 21: Hochdrucknut (P-Nut)
- 22: Niederdrucknut (ND-Nut)
- 23: Niederdrucknut (ND-Nut)
- 24: Hochdrucknut (HD-Nut)
- 25: Hochdrucknut (HD-Nut)
- 26: Steg
- 27: Steg
- 28: Steg
- 29: Steg
- 30: Steg
- 31: Verteilerlängsnut
- 32: Verteilerlängsnut
- 33: Druckraum
- 34: Druckraum
- 35: Zweigkanal
- 36: axiale Kanäle
- 37: Kanal
- 38: Zulaufseite von 6
- 39: -
- 40: Ablaufseite von 6
- 41: Kanal
- 42: Drucksperrnut
- 43: Drucksperrnut
- 44: Gehäuse-Dichtbund
- 45: Gehäuse-Dichtbund
- 46: Eindrehung
- 47: Eindrehung
- 48: Kanal
- 49: Ringnut
- 50: Kanal
- 51: Bohrung
- 52: Kolben
- 53: Kanal
- 54: Drosselstelle
- 55: Stirnfläche von 52
- 56: Stirnfläche von 52

## Patentansprüche

1. Hydrostatische Hilfskraftlenkung mit folgenden Merkmalen:
- Es ist eine durch ein Lenkhandrad antreibbare Handpumpe (6) vorgesehen;
- in Abhängigkeit von der Drehung des Lenkhandrades läßt sich ein Ventilkolben (10) in einer Gehäusebohrung (8) aus einer Mittenstellung gegen die Kraft von Federelementen (2) in zwei Lenkrichtungen verstellen;
- an die Gehäusebohrung (8) des Ventilkolbens (10) sind Druckkanäle (13; 35) einer Hochdruckpumpe (6), zu einem Behälter führende Rücklaufkanäle (15) sowie Druckkanäle (17 und 18) für einen Servomotor (20) angeschlossen;
- die Kanäle münden über Hoch- und Niederdrucknuten (24, 22 bzw. 25, 23) in die Gehäusebohrung (8), wobei der Ventilkolben (10) zum Verteilen des Drucköles mit den Hoch- und Niederdrucknuten zusammenwirkende Eindrehungen (z. B. 46, 47) und diese begrenzende Stege (29, 27 bzw. 28, 30) aufweist; - zwischen der Servomotor-Hochdrucknut (24; 25) und der Behälter-Niederdrucknut (22 bzw. 23) jeder Lenkrichtung liegt eine Drucksperrnut (42 bzw. 43);
**gekennzeichnet** durch folgende Merkmale:
- von jeder Drucksperrnut (42; 43) führt ein Kanal (48 bzw. 50) an eine Stirnseite einer Bohrung (51);
- die Bohrung (51) enthält einen Kolben (52);
- von einer ständig an die Hochdruckpumpe (6) angeschlossenen Hochdrucknut (P-Nut 21) zweigt ein zu der Bohrung (51) führender Kanal (53) ab,
- wobei der Kolben (52) in seinen durch die Stirnseiten der Bohrung (51) bestimmten Endlagen über einen der Kanäle (48 oder 50) eine Verbindung zwischen der ständig an die Hochdruckpumpe (14) angeschlossenen Hochdrucknut (P-Nut 21) und der jeweils der druckführenden Servomotor-Hochdrucknut (HD-Nut 24 bzw. 25) benachbarten Drucksperrnut (42 bzw. 43) herstellt.

2. Hydrostatische Hilfskraftlenkung nach Anspruch 1,
dadurch **gekennzeichnet,** daß ein zwischen der Servomotor-Hochdrucknut (HD-Nut 24 und 25) und der Behälter-Niederdrucknut (ND-Nut 22 bzw. 23) liegender Gehäuse-Dichtbund (44 bzw. 45) mindestens so breit ausgeführt ist, daß der Lenkventilkolben (10) diesen Dichtbund in der Mittenstellung überdeckt.

3. Hydrostatische Hilfskraftlenkung nach Anspruch 1,
dadurch **gekennzeichnet,** daß die Drucksperrnuten (42 und 43) derart angeordnet sind, daß diese bei einem Verstellweg des Ventilkolben (10) aus der Mittenstellung um einen Betrag gleich oder größer der Breite des zwischen der Servomotor-Hochdrucknut (24 bzw. 25) und der Behälter-Niederdrucknut (22 bzw. 23) liegenden Gehäuse-Dichtbundes (44 bzw. 45) vom Ventilkolben (10) überdeckt werden.

4. Hydrostatische Hilfskraftlenkung nach Anspruch 1,
**gekennzeichnet** durch folgende Merkmale: Die Einmündung (Ringnut 49) des mit der Hochdruckpumpe (14) verbundenen Kanals (53) in die Bohrung (51) ist etwa gleich breit wie die Länge des Kolbens 52.

5. Hydrostatische Hilfskraftlenkung nach Anspruch 1,
dadurch **gekennzeichnet,** daß der Querschnitt des mit der P-Nut (21) verbundenen Kanals (53) durch eine Drosselstelle (54) deutlich kleiner als der Querschnitt der zu den Drucksperrnuten (42 und 43) führenden Kanäle (48 bzw. 50) ist.

## Claims

1. A hydrostatic assisted steering system with the following characteristics:
- A hand-Pump (6) which can be driven by a steering wheel;
- a valve piston (10) can be moved from a central position in a housing bore (8) as a function of the rotation of the steering wheel, and is moved against the force of spring elements (2) in two steering directions;
- pressure channels (13; 35) of a high pressure pump (6), return channels (15) leading to a reservoir and pressure channels (17 and 18) for a servo motor (20) are connected to the housing bore (8) of the valve piston (10);
- the channels emerge through high and low pressure grooves (24, 22 or 25, 23) into the housing bore (8), whereby the valve piston (10) has notches (e.g. 46, 47) and projections (29, 27 or 28, 30) delimiting the above-mentioned notches which act in conjunction with the high and low pressure grooves in order to distribute the pressurized oil;
- a pressure blocking groove (42 or 43) is located between the servo motor high pressure groove (24; 25) and the reservoir low pressure groove (22 or 23) for each steering direction;
**characterized** in that:
- A channel (48 or 50) leads from each pressure blocking groove (42; 43) to the end of a bore (51);
- the bore (51) contains a piston (52);
- a channel (53) leading to the bore (51) branches off a high pressure groove (P-groove 21) which is continuously connected to the high pressure pump (6),
- whereby the piston (52) has specific end positions defined by the ends of the bore (51) and creates a connection between the high pressure groove (P-groove 21) which is continuously connected to the high pressure pump (14) and the pressure blocking groove (42 or 43) which is in each case adjacent to the pressurized servo motor high pressure groove (HP-groove 24 or 25), and whereby the above mentioned connection is established via one of the channels (48 or 50).

2. A hydrostatic assisted steering system in accordance with Claim 1, **characterized** in that, a housing sealing collar (44 or 45) is located between the servo motor high pressure groove (HP-groove 24 and 25) and the reservoir low pressure groove (LP-groove 22 or 23) and is at least wide enough so that the steering valve piston (10) covers this sealing collar in its central position.

3. A hydrostatic assisted steering system in accordance with Claim 1, **characterized** in that, the pressure blocking grooves (42 and 43) are arranged so that these are covered by the valve piston (10) given a displacement travel of the valve piston (10) from its central position by a value equal to or greater than the width of the housing sealing collar (44 or 45) located between the servo motor high pressure groove (24 or 25) and the reservoir low pressure groove (22 or 23).

4. A hydrostatic assisted steering system in accordance with Claim 1, **characterized** in that, the outlet (annular groove 49) of the channel (53) into the bore (51) has the same width as the length of the piston (52), and the channel (53) is connected to the high pressure pump (14).

5. A hydrostatic assisted steering system in accordance with Claim 1, **characterized** in that, the cross-section of the channel (53) which is connected to the P-groove (21) is considerably smaller than the cross-section of the channels (48 or 50) which lead to the pressure blocking grooves (42 and 43) due to a throttle point (54).

## Revendications

1. Direction assistée hydrostatique présentant les caractéristiques suivantes:
- Une pompe manuelle (6) entraînée par un volant à main est prévue;
- en fonction de la rotation du volant à main, il est possible de déplacer dans les deux sens de commande un piston à soupape (10) dans un alésage du carter (8) à partir d'une position centrale en l'opposant à la force des éléments ressorts (2);
- des canaux de refoulement (13; 35) d'une pompe haute pression (6), des canaux de retour (15) conduisant à un réservoir ainsi que des canaux de refoulement (17 et 18) pour un servo-moteur (20) sont raccordés au perçage du carter (8) du piston à soupape (10);
- les canaux débouchent dans le perçage de carter (8) par les rainures haute et basse pression (24, 22, voire 25, 23), sachant que pour la répartition de l'huile sous pression, le piston à soupape (10) présente des gorges tournées dans la masse (par ex. 46, 47) agissant de façon combinée avec les rainures haute et basse pression et des nervures limitant ces dernières (29, 27, voire 28,30)
- il y a une gorge d'arrêt de pression (42, voire 43) entre la rainure haute pression du servo-moteur (24; 25) et la rainure basse pression du réservoir (22, voire 23) dans chaque sens de commande;
**caractérisée** par les attributs suivants:
- à partir de chaque gorge d'arrêt de pression (42; 43) un canal (48,voire 50) conduit à une face frontale d'un perçage (51);
- le perçage (51) contient un piston (52);
- un canal (53) conduisant au perçage (51) dérive à partir d'une rainure haute pression (rainure P 21) raccordée en permanence à la pompe haute pression (6),
- sachant qu'en ses positions de fin de course déterminées par les faces frontales du perçage (51), le piston (52) établit par l'un des canaux (48 ou 50) une liaison entre la rainure haute pression (rainure P 21) raccordée en permanence à la pompe haute pression (14) et la gorge d'arrêt de pression (42, voire 43) voisine de la rainure haute pression respective du servo-moteur conductrice de pression (rainure HP 24, voire 25).

2. Direction assistée hydrostatique selon la
revendication 1, **caractérisée** en ce qu'une nervure d'étanchéité du carter (44, voire 45) se trouvant entre la rainure haute pression du servo-moteur (rainure HP 24 et 25) et la rainure basse pression du réservoir (rainure BP 22, voire 23) est au moins assez large pour que le piston à soupape de direction (10) recouvre cette nervure d'étanchéité en position centrale.

3. Direction assistée hydrostatique selon la
revendication 1, **caractérisée** en ce que les gorges d'arrêt de pression (42 et 43) sont disposées de façon à être recouvertes par le piston à soupape (10) lors d'une course de déplacement du piston à soupape (10) à partir de la position centrale d'une valeur égale ou supérieure à la largeur de la nervure d'étanchéité du carter (44, voire 45) se trouvant entre la rainure haute pression du servo-moteur (24, voire 25) et la rainure basse pression du réservoir (22, voire 23).

4. Direction assistée hydrostatique selon la
revendication 1, **caractérisée** par les attributs suivants: L'embouchure (rainure annulaire 49) dans le perçage (51) du canal (53) relié à la pompe haute pression (14) est d'une largeur pratiquement égale à la longueur du piston 52.

5. Direction assistée hydrostatique selon la
revendication 1, **caractérisée** en ce que la section transversale du canal (53) relié à la rainure P (21) est, en raison d'un étranglement (54), beaucoup plus petite que la section transversale des canaux (48, voire 50) qui conduisent aux rainures d'arrêt de pression (42 et 43).
